# EUROPEAN PATENT SPECIFICATION

(11) **EP 4 320 508 B1**
(45) Date of publication and mention of the grant of the patent: **10.06.2026**
(21) Application number: 22785269.6
(22) Date of filing: 05.04.2022
(51) Int. Cl.: G06F 3/06, G06F 12/02, G06F 1/26

(54) **METHOD AND APPARATUS TO REDUCE NAND DIE COLLISIONS IN A SOLID STATE DRIVE**
VERFAHREN UND VORRICHTUNG ZUR REDUZIERUNG VON NAND-CHIP-KOLLISIONEN IN EINEM FESTKÖRPERLAUFWERK
PROCÉDÉ ET APPAREIL POUR RÉDUIRE LES COLLISIONS SUR UNE PUCE NAND DANS UN LECTEUR TRANSISTORISÉ

(30) Priority: 05.04.2021 US 202117222048
(43) Date of publication of application: 14.02.2024
(73) Proprietor: SK hynix NAND Product Solutions Corp., Rancho Cordova, CA 95670 (US)
(72) Inventor: LI, Peng, Beaverton, OR 97007 (US); TRIKA, Sanjeev N., Portland, OR 97229 (US)
(74) Representative: Rummler, Felix
(86) International application number: PCT/US2022/023419
(87) International publication number: WO 2022/216664

(56) References cited:
- WO-A1-2018/067744
- KR-A- 20150 028 520
- US-A1- 2015 154 108
- US-A1- 2018 032 264
- US-A1- 2018 267 706
- US-A1- 2020 104 074
- US-A1- 2020 133 563
- US-A1- 2021 081 127
- US-A1- 2021 223 998

## Description

### CROSS REFERENCE TO RELATED APPLICATION

This application claims the benefit on United States Patent Application No. 17/222,048, filed April 5, 2021.

### FIELD

This disclosure relates to solid state drives and in particular to NAND die collisions in a solid state drive.

### BACKGROUND

Non-volatile memory refers to memory whose state is determinate even if power is interrupted to the device. A solid state drive is a storage device that stores data in non-volatile memory. Typically, the solid-state drive includes a block-based memory such as NAND Flash and a controller to manage read/write requests received from a host communicatively coupled to the solid state drive directed to the NAND Flash.

A host system can communicate with a solid state drive (SSD) over a high-speed serial computer expansion bus, for example, a Peripheral Component Interconnect Express (PCIe) bus using a Non-Volatile Memory Express (NVMe) standard protocol. The Non-Volatile Memory Express (NVMe) standard protocol defines a register level interface for host software to communicate with the solid state drive over the Peripheral Component Interconnect Express (PCIe) bus.

WO 2018/067744 A1 discloses a storage system for use with dual peripheral component interconnect (PCI) direct mapped storage devices has storage system controllers to determine that data is to be stored in first direct-mapped solid state drive (SSD) storage portion.

### BRIEF DESCRIPTION OF THE DRAWINGS

Features of embodiments of the claimed subject matter will become apparent as the following detailed description proceeds, and upon reference to the drawings, in which like numerals depict like parts, and in which:
Fig. 1 is a block diagram of a computer system that includes host circuitry communicatively coupled to a multi-stream solid state drive;
Fig. 2 is a block diagram of an embodiment of the multi-stream solid state drive in Fig. 1;
Fig. 3 illustrates queues in the byte-addressable write-in-place non-volatile memory used to manage transfer of data for streams between the block addressable non-volatile memory and the host system;
Fig. 4 is a flowgraph illustrating a method performed by a firmware task in firmware to manage the byte-addressable write-in-place non-volatile memory;
Fig. 5 is a flowgraph of operations performed by a firmware task in firmware in the multi-stream solid state drive in response to a write request received from the host;
Fig. 6 is a flowgraph of operations performed by a firmware task in firmware in the multi-stream solid state drive in response to a read request received from the host;
Fig. 7 is a flowgraph of a method to handle a Power Loss Recovery (PLR) event in the solid state drive; and
Fig. 8 is a block diagram of an embodiment of a computer system that includes the multi-stream solid state drive.

Although the following Detailed Description will proceed with reference being made to illustrative embodiments of the claimed subject matter, many alternatives, modifications, and variations thereof will be apparent to those skilled in the art. Accordingly, it is intended that the claimed subject matter be viewed broadly, and be defined as set forth in the accompanying claims.

### DESCRIPTION OF EMBODIMENTS

The invention is defined in the appended claims.

The dependent claims set out particular embodiments.

Typically, a solid state drive (SSD) includes independent NAND dies (also referred to a NAND Flash dies) communicatively coupled to a controller to allow parallelization of I/O operations to the NAND dies.

Time to perform a program operation in the NAND die is much longer than the time to perform a read operation in the NAND die. A Program Suspend Resume (PSR) feature in the solid state drive allows suspension of an ongoing program operation to service a read operation, however the Program Suspend Resume increases the time required to complete the read operation. A read request received from the host system that is queued behind an ongoing program operation on a NAND die can have a significant impact on the read latency or read Quality of Service (rQoS) of the solid state drive.

When data stored in a block in a NAND Flash in the solid state drive is no longer needed, data must be erased before one or more blocks storing the data can be used to store new data. Prior to erasing, valid data in the one or more blocks must be written to other blocks in the NAND Flash. These additional NAND operations produce a multiplying effect that increases the number of writes required, producing an "amplification" effect, that is referred to as "write amplification." For example, if 3 of 64 pages in a block are valid (in use) and all other pages are invalid (no longer in use), the three valid pages must be written to another block prior to erasing the block resulting in three write page operations in addition to the erase operation and the new data to be written. Write amplification factor is a numerical value that represents the amount of data that the solid state drive controller has to write in relation to the amount of new data to be written. The writing of the valid data to other blocks and the NAND Flash erase operation are typically referred to as "garbage" collection (garbage-collection).

A request for a host read operation can be received for a NAND die while a garbage collection read operation to the same NAND die is in process. This can be referred to as a "read on read collision". The "read on read collision" results in an increase in read latency for the host read operation. The read latency includes the time to complete the garbage collection read operation and time to perform error handling (if required).

A request for a host read operation can be received for a NAND die while a garbage collection program operation to the same NAND die is in process. A request for a host read operation can be received for a NAND die while a host program operation to the same NAND die is in process. These can be referred to as a "read on write collisions". A "read on write collision" results in an increase in write latency for the write operations. The write latency includes the time to suspend the program operation, perform the read operation resume the program operation. The "read on write collision" and "read on read collision" can be referred to as a NAND die collision.

The data movement operations to write the valid data in stored in one or more pages in the block from the block in the NAND die to be erased to other blocks in the NAND die prior to erasing the invalid data in the block in the NAND die results uses bandwidth that could be used to process user requests to read/write data in the solid state drive.

To reduce the number of pages storing valid data in the NAND die to be moved between blocks in the NAND die, the Non-Volatile Memory Express (NVMe) standard protocol allows a host to associate a write operation to a NAND die with a stream. All data associated with the stream is expected to be invalidated at the same time (that is, the data has the same expected lifetime). Data with a different expected lifetime is mapped to different streams.

The host system can explicitly open "streams" in the solid state drive and send write requests to different streams according to the expected lifetime of the data to be written to the solid state drive. The solid state drive can be referred to as a multi-streamed solid state drive. The multi-streamed solid state drive ensures that the data in a stream are written together in a NAND block and separated from data associated with other streams.

The use of multiple streams in a multi-stream solid state drive reduces write amplification. However, as the number of streams increases, the probability of a NAND die collision increases which can impact read Quality of Service. The multiple streams can independently send read and write requests to the same NAND die. For example, read latency for a multi-stream solid state drive with, mixed workload, 70% reads and 30% writes, command Queue Depth of 1 (QD1) per stream, data transfer of 4 KibiByte (KiB) for each read and write and the Logical Block Addresses of the reads and writes are random and Tri-level Cell (TLC) NAND at the 99 percentile level increases from 124 microseconds for 4 streams to 2200 microseconds for 8 streams.

Quality of Service of the multi-stream solid state drive is improved by storing data to be written to a NAND die in the solid state drive in a byte-addressable write-in-place non-volatile memory in the solid state drive in the event of a die collision preventing a write to the NAND die.

Various embodiments and aspects of the inventions will be described with reference to details discussed below, and the accompanying drawings will illustrate the various embodiments. The following description and drawings are illustrative of the invention and are not to be construed as limiting the invention. Numerous specific details are described to provide a thorough understanding of various embodiments of the present invention. However, in certain instances, well-known or conventional details are not described in order to provide a concise discussion of embodiments of the present inventions.

Reference in the specification to "one embodiment" or "an embodiment" means that a particular feature, structure, or characteristic described in conjunction with the embodiment can be included in at least one embodiment of the invention. The appearances of the phrase "in one embodiment" in various places in the specification do not necessarily all refer to the same embodiment.

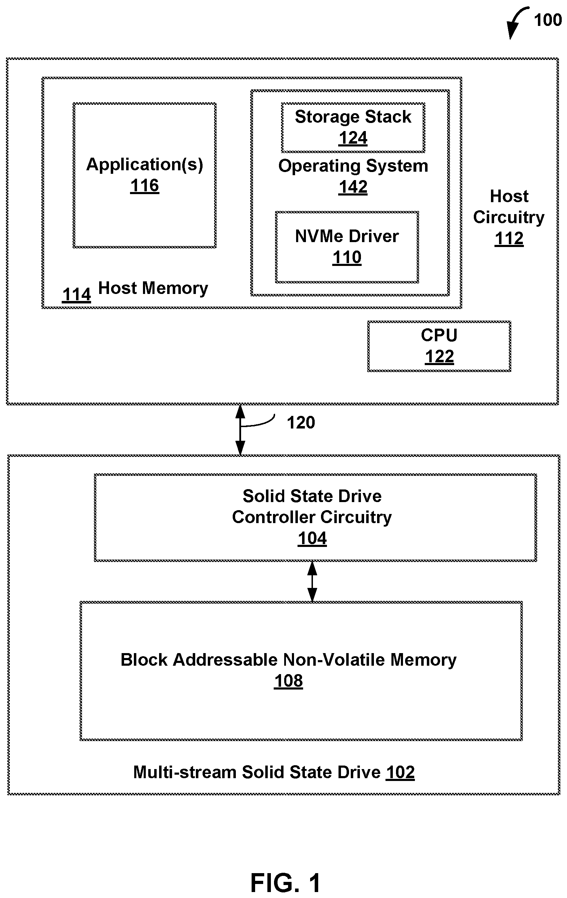

Fig. 1 is a block diagram of a computer system 100 that includes host circuitry 112 communicatively coupled to a multi-stream solid state drive 102. The host circuitry 112 includes a host memory 114 and a central processing unit (CPU) 122 that can also be referred to as a processor. One or more applications 116 (programs that perform a particular task or set of tasks) and an operating system 142 that includes a storage stack 124 and an NVMe driver 110 may be stored in host memory 114.

In an embodiment, the multi-stream solid state drive 102 has an Enterprise and Data Center SSD Form Factor (EDSFF) and includes 124 or more NAND dies.

An operating system 142 is software that manages computer hardware and software including memory allocation and access to Input/Output (I/O) devices. Examples of operating systems include Microsoft^{®} Windows^{®}, Linux^{®}, iOS^{®} and Android^{®}. In an embodiment for the Microsoft^{®} Windows^{®} operating system, the storage stack 124 may be a device stack that includes a port/miniport driver for the multi-stream solid state drive 102.

In an embodiment, the host memory 114 is a volatile memory. Volatile memory is memory whose state (and therefore the data stored in it) is indeterminate if power is interrupted to the device. Dynamic volatile memory requires refreshing the data stored in the device to maintain state. One example of dynamic volatile memory includes DRAM (Dynamic Random Access Memory), or some variant such as Synchronous DRAM (SDRAM). A memory subsystem as described herein may be compatible with a number of memory technologies, such as DDR3 (Double Data Rate version 3, original release by JEDEC (Joint Electronic Device Engineering Council) on June 27, 2007). DDR4 (DDR version 4, originally published in September 2012 by JEDEC), DDR5 (DDR version 5, originally published in July 2020), LPDDR3 (Low Power DDR version 3, JESD209-3B, August 2013 by JEDEC), LPDDR4 (LPDDR version 4, JESD209-4, originally published by JEDEC in August 2014), LPDDR5 (LPDDR version 5, JESD209-5A, originally published by JEDEC in January 2020), WIO2 (Wide Input/Output version 2, JESD229-2 originally published by JEDEC in August 2014), HBM (High Bandwidth Memory, JESD235, originally published by JEDEC in October 2013), HBM2 (HBM version 2, JESD235C, originally published by JEDEC in January 2020), or HBM3 (HBM version 3 currently in discussion by JEDEC), or others or combinations of memory technologies, and technologies based on derivatives or extensions of such specifications. The JEDEC standards are available at www.jedec.org.

The host circuitry 112 can communicate with the multi-stream solid state drive 102 over a high-speed serial computer expansion bus 120, for example, a Peripheral Component Interconnect Express (PCIe) bus. The host circuitry 112 manages the communication over the Peripheral Component Interconnect Express (PCIe) bus. In an embodiment, the host system communicates over the Peripheral Component Interconnect Express (PCIe) bus using a Non-Volatile Memory Express (NVMe) standard protocol. The Non-Volatile Memory Express (NVMe) standard protocol defines a register level interface for host software to communicate with the Solid State Drive (SSD) 102 over the Peripheral Component Interconnect Express (PCIe) bus. The NVM Express standards are available at www.nvmexpress.org. The PCIe standards are available at pcisig.com.

The multi-stream solid state drive 102 includes solid state drive controller circuitry 104 and a block addressable non-volatile memory 108. A request to read data stored in block addressable non-volatile memory 108 in the multi-stream solid state drive 102 may be issued by one or more applications 116 (programs that perform a particular task or set of tasks) through the storage stack 124 in an operating system 142 to the solid state drive controller circuitry 104.

The solid state drive controller circuitry 104 in the multi-stream solid state drive 102 queues and processes commands (for example, read, write ("program"), erase commands received from the host circuitry 112 to perform operations in the block addressable non-volatile memory 108. Commands received by the solid state drive controller circuitry 104 from the host interface circuitry 202 can be referred to as Host Input Output (IO) commands.

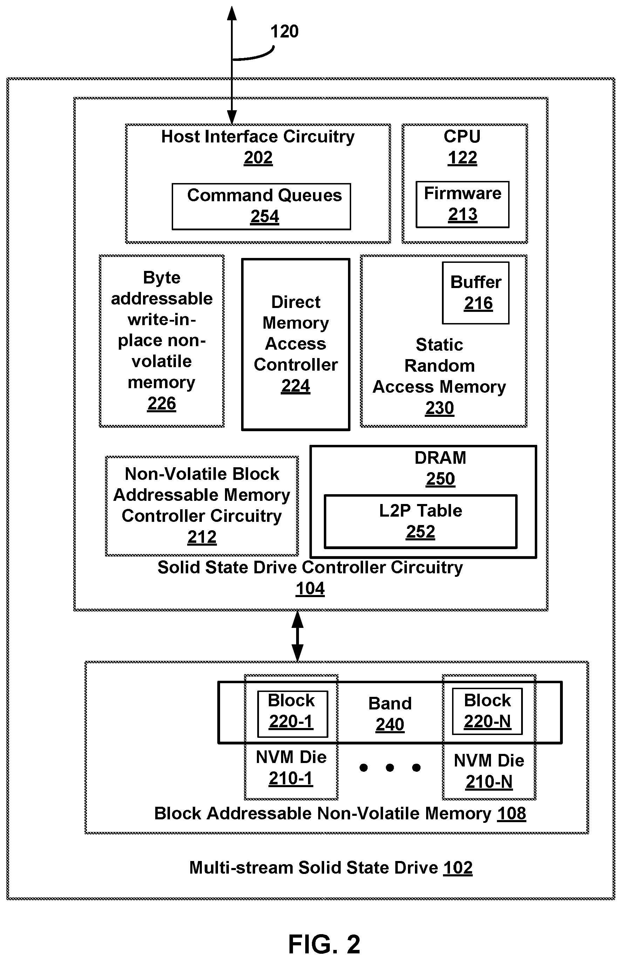

Fig. 2 is a block diagram of an embodiment of the multi-stream solid state drive 102 in Fig. 1. The solid state drive controller circuitry 104 in the multi-stream solid state drive 102 includes host interface circuitry 202, non-volatile block addressable memory controller circuitry 212, CPU 122, firmware 213, a Direct Memory Access Controller (DMAC) 224, Static Random Access Memory 230, Dynamic Random Access Memory (DRAM) 250 and a byte-addressable write-in-place non-volatile memory 226. Firmware 213 can be executed by CPU 122. The solid state drive controller circuitry 104 can be included in a Field Programmable Gate Array (FPGA) or an Application Specific Integrated Circuit (ASIC). Firmware 213 can be executed by processor 122.

A logical block is the smallest addressable data unit for read and write commands to access the block addressable non-volatile memory 108 in the solid state drive 102. The address of the logical block is commonly referred to as a Logical Block Address (LBA).

A logical to physical (L2P) address indirection table 252 (also referred to as L2P Table 252) in Dynamic Random Access Memory 250 stores a physical block address in block addressable non-volatile memory 108 in the multi-stream solid state drive 102 corresponding to each LBA. Typically, the L2P address indirection table 252 stores the block addressable non-volatile memory physical block addresses with a 4 KibiByte (KiB) indirection unit (IU) granularity.

Static Random Access Memory (SRAM) is a volatile memory. Volatile memory is memory whose state (and therefore the data stored in it) is indeterminate if power is interrupted to the device. SRAM is a type of volatile memory that uses latching circuitry to store each bit. SRAM is typically used as buffer memory because in contrast to Dynamic Random Access Memory (DRAM) the data stored in SRAM does not need to be periodically refreshed.

Examples of the byte-addressable write-in-place non-volatile memory 226 may include, but are not limited to, single or multi-level Phase Change Memory (PCM) or phase change memory with a switch (PCMS), non-volatile types of memory that include chalcogenide phase change material (for example, chalcogenide glass), resistive memory including metal oxide base, oxygen vacancy base and Conductive Bridge Random Access Memory (CB-RAM), nanowire memory, ferroelectric random access memory (FeRAM, FRAM), magneto resistive random access memory (MRAM) that incorporates memristor technology, spin transfer torque (STT)-MRAM, a spintronic magnetic junction memory based device, a magnetic tunneling junction (MTJ) based device, a DW (Domain Wall) and SOT (Spin Orbit Transfer) based device, a thyristor based memory device, or a combination of any of the above, or other types of block or byte-addressable, write-in-place memory.

The byte-addressable write-in-place non-volatile memory 226 can also be a volatile memory with Power Loss Imminent energy (such as on-board capacitors) such as an Integrated Memory Buffer (IMB) or Persistent Memory Region (PMB). Examples of volatile memory include DRAM (Dynamic Random Access Memory) and a variant of DRAM such as Synchronous DRAM (SDRAM).

The block addressable non-volatile memory 108 is a non-volatile memory. A non-volatile memory (NVM) device is a memory whose state is determinate even if power is interrupted to the device. In one embodiment, the Block Addressable non-volatile memory 108 is a NAND Flash memory, or more specifically, multi-threshold level NAND flash memory (for example, Single-Level Cell ("SLC"), Multi-Level Cell ("MLC"), Tri-Level Cell ("TLC"), Quad-Level Cell ("QLC"), Penta-Level Cell ("PLC") or some other NAND Flash memory).

The block addressable non-volatile memory 108 includes a plurality of NAND dies 210-1,...210-N (also referred to as NAND Flash dies). Typically, data is written (striped) across many NAND die 210-1,...210-N in the multi-stream solid state drive 102 to optimize the write bandwidth to the block addressable non-volatile memory 108.

A band 240, which can also be referred to as a stripe spans across one or multiple blocks of all the individual NAND dies 210-1,...210-N and this enables IO bandwidth maximization via parallel IO operations across the block addressable non-volatile memory dies 210-1,...210-N.

The non-volatile memory on each of the plurality of NAND dies 210-1,...,210-N includes a plurality of blocks 220-1,...,220-N, with each block including a plurality of pages. Each page in the plurality of pages to store data and associated metadata.

In an embodiment each NAND die 210-1,...,210-N has 2048 blocks, each block has 64 pages, and each page can store 2048 bytes of data and 64 bytes of metadata. The band 240 can include the plurality of blocks 220-1,...,220-N, with one block per NAND die assigned to the band 240. A band 240 having a plurality of blocks in a plurality of NAND dies can be assigned to a stream or one or more individual blocks in a NAND die can be assigned to a stream in the multi-stream solid state drive 102. In other embodiments, more than one block per NAND die can be assigned to the band 240. For example, n to the power of 2 (2,4, 8...) blocks per NAND die can be assigned to the band 240.

The non-volatile block addressable memory controller circuitry 212 in the solid state drive controller circuitry 104 queues and processes commands (for example, read, write ("program"), erase commands) received from the host circuitry 112 for the block addressable non-volatile memory 108. Data associated with host I/O commands, for example, host read and host write commands received over the PCIe bus 120 from host circuitry 112 are stored in buffer 216 in Static Random Access Memory 230. Buffer 216 can also be referred to as a transfer buffer (TBUF). The received host I/O commands are stored in command queues 254 in host interface circuitry 202.

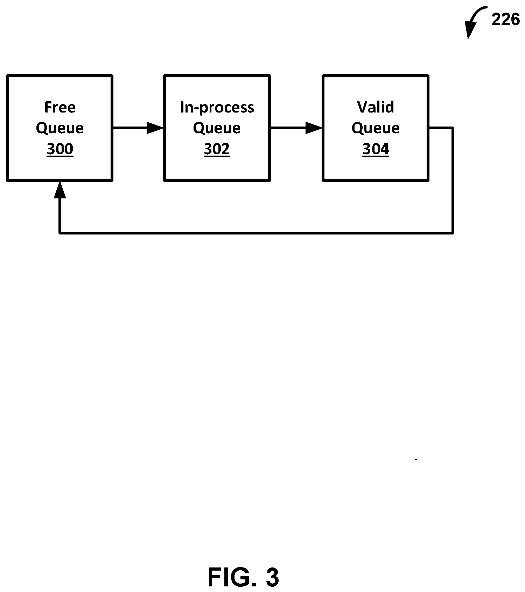

Fig. 3 illustrates queues in the static random access memory 230 for the byte-addressable write-in-place non-volatile memory 226 that are used to manage transfer of data for streams between the block addressable non-volatile memory 108 and the host circuitry 112. The byte-addressable write-in-place non-volatile memory 226 is managed at the same indirection unit granularity as the block addressable non-volatile memory 108.

The byte-addressable write-in-place non-volatile memory 226 has a pool of indirection units that are assigned to one of three queues: a free queue 300, an in-process queue 302 and a valid queue 304.

An indirection unit is allocated to a stream for data transfer from the free queue 300 in response to receiving a host write request to write to block addressable non-volatile memory 108. After the indirection unit has been assigned to the stream for data transfer, a pointer to the allocated indirection unit is moved to the in-process queue 302.

After the data has been written to the allocated indirection unit, the pointer to the allocated indirection unit is moved to the valid queue 304. After the data in the allocated indirection unit in the valid queue 304 is written to the block addressable non-volatile memory 108 or rewritten by the host circuitry 112, the allocated indirection unit is moved to the free queue 300. If the indirection unit is rewritten by the host circuitry 112 before it is written to the NAND die 210-1,...,210-N, the updated host data is available in buffer 216 in static random access memory 230. If there is no collision, the updated data is written from the buffer 216 to the NAND die 210-1,...,210-N.

The byte-addressable write-in-place non-volatile memory 226 improves Quality of Service (QoS) for the multi-stream solid state drive 102 without bandwidth limitations per stream and scales as the number of streams increases.

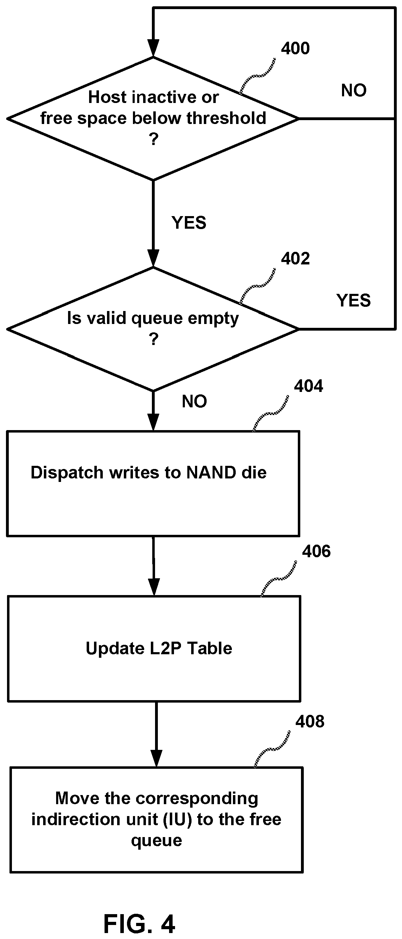

Fig. 4 is a flowgraph illustrating a method performed by a firmware task in firmware 213 to manage the byte-addressable write-in-place non-volatile memory 226.

At block 400, if the host is inactive or the free space in the byte-addressable write-in-place non-volatile memory 226 is below a threshold, processing continues with block 402 to free indirection units in the byte-addressable write-in-place non-volatile memory 226.

At block 402, if the valid queue 304 is empty, there are no indirection units in the byte-addressable write-in-place non-volatile memory 226 to be written to the block addressable non-volatile memory 108, processing continues with block 400.

At block 404, the valid queue 304 is not empty, there are indirection units in the byte-addressable write-in-place non-volatile memory 226 to be written to the block addressable non-volatile memory 108. Indirection units from the valid queue 304 to be written the block addressable non-volatile memory 108 can be selected based on LRU (Least Recently Used), FIFO (First In First Out) or inactivity status of a NAND die.

In an embodiment, the inactivity status of a NAND die can be determined by the state of the Ready/Busy signal on the NAND die. The state of the Ready/Busy signal can be read by the solid state drive controller circuitry 104. The number of indirection units selected to be written is dependent on the size of the indirection unit and the physical layout of the NAND die. For example, in an embodiment in which the size of the indirection unit is 4KiB, the NAND die has a dual plane, and a page in the NAND die is 16KiB, 8 indirection units are selected. The selected indirection units are read from the byte-addressable write-in-place non-volatile memory 226 and written to the block addressable non-volatile memory 108.

At block 406, the L2P table 252 is updated with the physical address in the block addressable non-volatile memory 108 in which the indirection units have been written.

At block 408, the selected indirection units are moved from the valid queue 304 to the free queue 300.

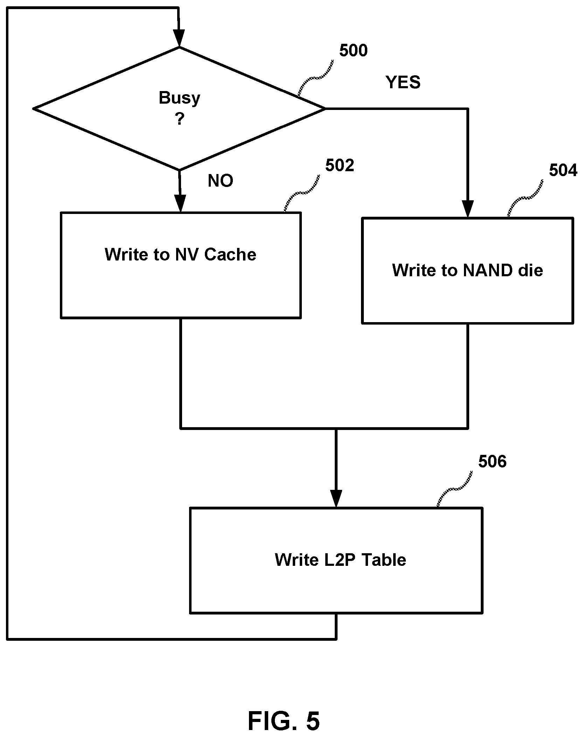

Fig. 5 is a flowgraph of operations performed by a firmware task in firmware 213 in the solid state drive 102 in response to a write request received from the host circuitry 112.

At block 500, if the NAND die to which the write request is directed is busy, which can be determined based on the state of the Ready/Busy signal on the NAND die, processing continues with block 502. If the NAND die is not busy, processing continues with block 504.

At block 502, the NAND die is busy. The data associated with the write request is written to the byte-addressable write-in-place non-volatile memory 226 (that can also be referred to as non-volatile memory cache or persistent memory cache). Processing continues with block 506 to update the L2P table 252 with the physical location of the data written to the byte-addressable write-in-place non-volatile memory 226.

At block 504, the NAND die is not busy. The data associated with the write request is written directly to the NAND die. Processing continues with block 506 to update the L2P table 252 with the physical location of the data written to the NAND die.

At block 506, in an embodiment, the most significant bit (MSB) of an L2P entry in the L2P table 252 is used as an identifier of a memory corresponding to the physical block address. The state of the MSB is used to indicate if the data is stored in a NAND die or in the byte-addressable write-in-place non-volatile memory 226. For example, if the state of MSB is logical '1', the remaining bits represent an offset in the byte-addressable write-in-place non-volatile memory 226 and if the state of MSB is logical '0', the remaining bits represent an address in the NAND die.

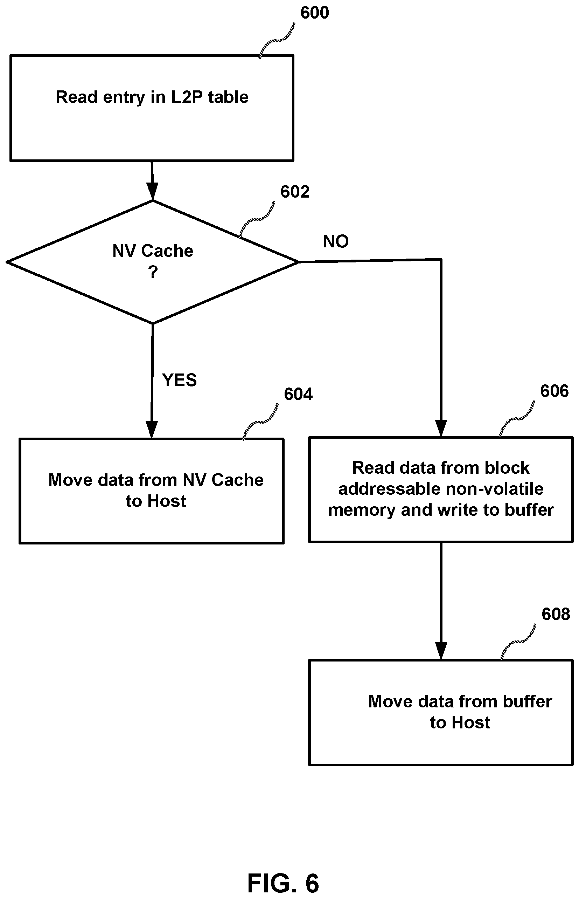

Fig. 6 is a flowgraph of operations performed by a firmware task in firmware 213 in the solid state drive 102 in response to a read request received from host circuitry 112.

At block 600, in response to a read request received from host circuitry 112 directed to the block addressable non-volatile memory 108, the solid state drive controller circuitry 212 reads the entry corresponding to the logical block address included in the read request in the L2P table 252 to obtain the physical address in the block addressable non-volatile memory 108.

At block 602, if the physical address is in the byte-addressable write-in-place non-volatile memory 226, processing continues with block 604. If the physical address is in the block addressable non-volatile memory 108, processing continues with block 606.

At block 604, the data in the byte-addressable write-in-place non-volatile memory 226 is read from byte-addressable write-in-place non-volatile memory 226 and moved to the host circuitry 112 by the Direct Memory Access (DMA) controller 224 (also referred to as a DMA engine or DMA circuitry) in the solid state drive controller circuity 212.

At block 606, the solid state drive controller circuitry 212 reads the data from the block addressable non-volatile memory 108 and writes the data to the buffer 216 in the static random access memory 230.

At block 608, after the data has been written to the buffer 216 in the static random access memory 230, the data is read from the buffer 216 and moved to the host circuitry by the DMA controller 224 in the solid state drive controller circuity 212.

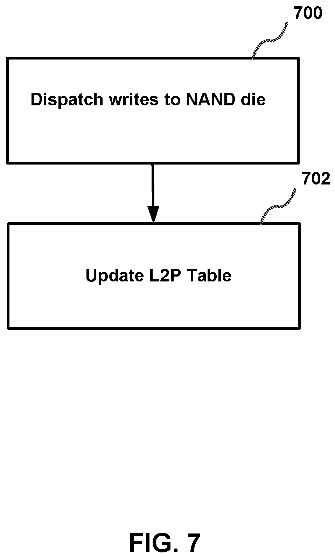

Fig. 7 is a flowgraph of a method to handle a Power Loss Recovery (PLR) event in the multi-stream solid state drive 102.

During host writes, the data in the byte-addressable write-in-place non-volatile memory 226 and the buffer 216 in static random access memory 230 are both Power Loss Imminent (PLI) safe. Thus, additional power loss handling is not needed prior to loss of power. In the subsequent power up of the multi-stream solid state drive 102 after loss of power, firmware 213 in the solid state drive controller circuitry 104 recovers the L2P table 252 to the latest state before the power loss. The correctness of the Power Loss Recovery task is maintained by ensuring that the byte-addressable write-in-place non-volatile memory 226 has the most recent copy of logical block addresses prior to loss of power by first recovering the data from the byte-addressable write-in-place non-volatile memory 226.

At block 700, the solid state drive 102 replays the data from the NAND dies (also referred to as NAND media) 210-1,...201-N. During replay, the solid state drive controller circuitry 104 reads a backup copy of the L2P table 252 from the block addressable non-volatile memory 108. However, the backup copy of the L2P table 252 in the block addressable non-volatile memory 108 may not be the most recent L2P table 252 before the PLI event. To recover the latest L2P table 252 before the PLI event, the solid state drive controller circuitry 104 replays the host writes after the backup copy of the L2P table 252 was written prior to the PLI event in the block addressable non-volatile memory 108. The host writes are replayed by reading a band journal of the corresponding band 240 to verify the logical block address sequence of the host writes (write operations from host circuitry received by the host interface circuitry 202).

At block 702, the byte-addressable write-in-place non-volatile memory 226 stores the host writes prior to the detection of the PLI event. The solid state drive 102 replays the data stored in the byte-addressable write-in-place non-volatile memory 226, that is, it updates the L2P table 252 with the host writes in the byte-addressable write-in-place non-volatile memory 226.

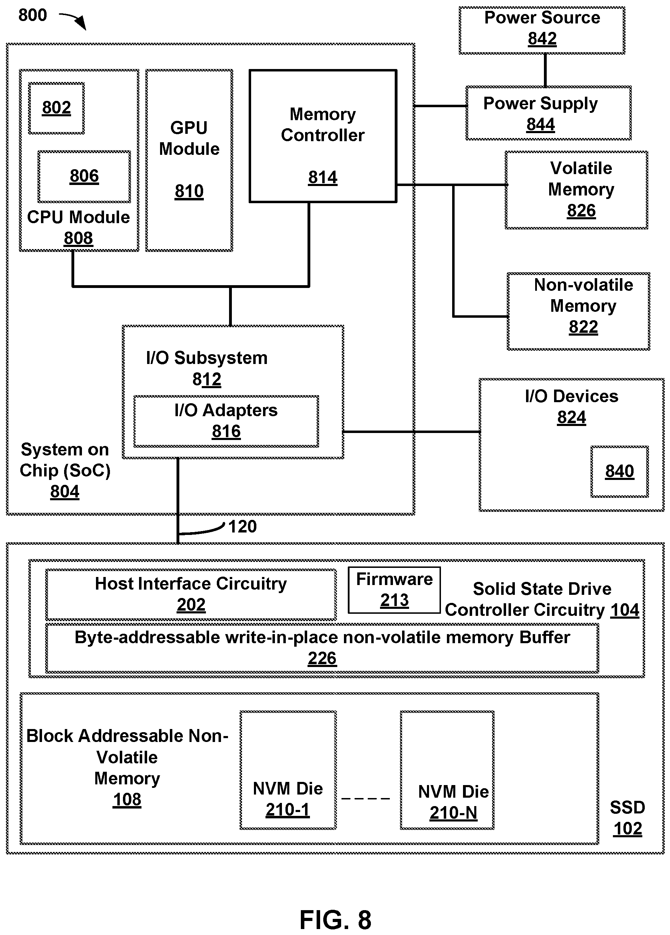

Fig. 8 is a block diagram of an embodiment of a computer system 800 that includes the multi-stream solid state drive 102. Computer system 800 can correspond to a computing device including, but not limited to, a server, a workstation computer, a desktop computer, a laptop computer, and/or a tablet computer.

The computer system 800 includes a system on chip (SOC or SoC) 804 which combines processor, graphics, memory, and Input/Output (I/O) control logic into one SoC package. The SoC 804 includes at least one Central Processing Unit (CPU) module 808, a memory controller 814 that can be coupled to volatile memory 826 and/or non-volatile memory 822, and a Graphics Processor Unit (GPU) 810. In other embodiments, the memory controller 814 can be external to the SoC 804. The CPU module 808 includes at least one processor core 802 and a level 2 (L2) cache 806.

Although not shown, each of the processor core(s) 802 can internally include one or more instruction/data caches, execution units, prefetch buffers, instruction queues, branch address calculation units, instruction decoders, floating point units, retirement units, etc. The CPU module 808 can correspond to a single core or a multi-core general purpose processor, such as those provided by Intel^{®} Corporation, according to one embodiment.

The Graphics Processor Unit (GPU) 810 can include one or more GPU cores and a GPU cache which can store graphics related data for the GPU core. The GPU core can internally include one or more execution units and one or more instruction and data caches. Additionally, the Graphics Processor Unit (GPU) 810 can contain other graphics logic units that are not shown in Fig. 8, such as one or more vertex processing units, rasterization units, media processing units, and codecs.

Within the I/O subsystem 812, one or more I/O adapter(s) 816 are present to translate a host communication protocol utilized within the processor core(s) 802 to a protocol compatible with particular I/O devices. Some of the protocols that adapters can be utilized for translation include Peripheral Component Interconnect (PCI)-Express (PCIe); Universal Serial Bus (USB); Serial Advanced Technology Attachment (SATA) and Institute of Electrical and Electronics Engineers (IEEE) 1594 "Firewire".

The I/O adapter(s) 816 can communicate with external I/O devices 824 which can include, for example, user interface device(s) including a display and/or a touch-screen display 840, printer, keypad, keyboard, communication logic, wired and/or wireless, storage device(s) including hard disk drives ("HDD"), solid-state drives ("SSD"), removable storage media, Digital Video Disk (DVD) drive, Compact Disk (CD) drive, Redundant Array of Independent Disks (RAID), tape drive or other storage device. The storage devices can be communicatively and/or physically coupled together through one or more buses using one or more of a variety of protocols including, but not limited to, SAS (Serial Attached SCSI (Small Computer System Interface)), PCIe (Peripheral Component Interconnect Express), NVMe (NVM Express) over PCIe (Peripheral Component Interconnect Express), and SATA (Serial ATA (Advanced Technology Attachment)).

Additionally, there can be one or more wireless protocol I/O adapters. Examples of wireless protocols, among others, are used in personal area networks, such as IEEE 802.15 and Bluetooth, 4.0; wireless local area networks, such as IEEE 802.11-based wireless protocols; and cellular protocols.

The I/O adapter(s) 816 can also communicate with a solid-state drive ("SSD") 102 which includes solid state drive controller circuitry 104, host interface circuitry 202 and block addressable non-volatile memory 108 that includes one or more NAND dies 210-1, ...210-N. The solid state drive controller circuitry 104 includes firmware 213 and byte-addressable write-in-place non-volatile memory 226.

The I/O adapters 816 can include a Peripheral Component Interconnect Express (PCIe) adapter that is communicatively coupled using the NVMe (NVM Express) over PCIe (Peripheral Component Interconnect Express) protocol over bus 120 to the host interface circuitry 202 in the multi-stream solid state drive 102.

Volatile memory is memory whose state (and therefore the data stored in it) is indeterminate if power is interrupted to the device. Dynamic volatile memory requires refreshing the data stored in the device to maintain state. One example of dynamic volatile memory includes DRAM (Dynamic Random Access Memory), or some variant such as Synchronous DRAM (SDRAM). A memory subsystem as described herein may be compatible with a number of memory technologies, such as DDR3 (Double Data Rate version 3, original release by JEDEC (Joint Electronic Device Engineering Council) on June 27, 2007). DDR4 (DDR version 4, JESD79-4, originally published in September 2012 by JEDEC), DDR5 (DDR version 5, JESD79-5, originally published in July 2020), LPDDR3 (Low Power DDR version 3, JESD209-3B, August 2013 by JEDEC), LPDDR4 (LPDDR version 4, JESD209-4, originally published by JEDEC in August 2014), LPDDR5 (LPDDR version 5, JESD209-5A, originally published by JEDEC in January 2020), WIO2 (Wide Input/Output version 2, JESD229-2 originally published by JEDEC in August 2014), HBM (High Bandwidth Memory, JESD235, originally published by JEDEC in October 2013), HBM2 (HBM version 2, JESD235C, originally published by JEDEC in January 2020), or HBM3 (HBM version 3 currently in discussion by JEDEC), or others or combinations of memory technologies, and technologies based on derivatives or extensions of such specifications. The JEDEC standards are available at www.jedec.org.

Power source 842 provides power to the components of system 800. More specifically, power source 842 typically interfaces to one or multiple power supplies 844 in system 800 to provide power to the components of system 800. In one example, power supply 844 includes an AC to DC (alternating current to direct current) adapter to plug into a wall outlet. Such AC power can be renewable energy (e.g., solar power) power source 842. In one example, power source 842 includes a DC power source, such as an external AC to DC converter. In one example, power source 842 or power supply 844 includes wireless charging hardware to charge via proximity to a charging field. In one example, power source 842 can include an internal battery or fuel cell source.

An embodiment has been described for a byte-addressable write-in-place non-volatile memory 226 internal to the solid state drive 102. In another embodiment, byte-addressable write-in-place non-volatile memory 226 is external to the solid state drive 102, and can be shared across a plurality of solid state drives 102. For example, the byte-addressable write-in-place non-volatile memory 226 can be in volatile memory 826, for example, volatile random access memory that is battery backed up or in the non-volatile memory 822.

Flow diagrams as illustrated herein provide examples of sequences of various process actions. The flow diagrams can indicate operations to be executed by a software or firmware routine, as well as physical operations. In one embodiment, a flow diagram can illustrate the state of a finite state machine (FSM), which can be implemented in hardware and/or software. Although shown in a particular sequence or order, unless otherwise specified, the order of the actions can be modified. Thus, the illustrated embodiments should be understood as an example, and the process can be performed in a different order, and some actions can be performed in parallel. Additionally, one or more actions can be omitted in various embodiments; thus, not all actions are required in every embodiment. Other process flows are possible.

To the extent various operations or functions are described herein, they can be described or defined as software code, instructions, configuration, and/or data. The content can be directly executable ("object" or "executable" form), source code, or difference code ("delta" or "patch" code). The software content of the embodiments described herein can be provided via an article of manufacture with the content stored thereon, or via a method of operating a communication interface to send data via the communication interface. A machine readable storage medium can cause a machine to perform the functions or operations described, and includes any mechanism that stores information in a form accessible by a machine (e.g., computing device, electronic system, etc.), such as recordable/non-recordable media (e.g., read only memory (ROM), random access memory (RAM), magnetic disk storage media, optical storage media, flash memory devices, etc.). A communication interface includes any mechanism that interfaces to any of a hardwired, wireless, optical, etc., medium to communicate to another device, such as a memory bus interface, a processor bus interface, an Internet connection, a disk controller, etc. The communication interface can be configured by providing configuration parameters and/or sending signals to prepare the communication interface to provide a data signal describing the software content. The communication interface can be accessed via one or more commands or signals sent to the communication interface.

Various components described herein can be a means for performing the operations or functions described. Each component described herein includes software, hardware, or a combination of these. The components can be implemented as software modules, hardware modules, special-purpose hardware (e.g., application specific hardware, application specific integrated circuits (ASICs), digital signal processors (DSPs), etc.), embedded controllers, hardwired circuitry, etc.

Besides what is described herein, various modifications can be made to the disclosed embodiments and implementations of the invention without departing from their scope.

Therefore, the illustrations and examples herein should be construed in an illustrative, and not a restrictive sense. The scope of the invention should be measured solely by reference to the claims that follow.

## Claims

1. A solid state drive comprising:
a controller (104) configured to receive a command from a host system (112) that is communicatively coupled to the solid state drive (102), wherein the command indicates to write data in the solid state drive, and wherein the data is associated with a stream;
a plurality of NAND dies (210-1...210-N) that are used to store data, wherein a block in one of the plurality of NAND dies is assigned to the stream; and
a byte-addressable write-in-place non-volatile memory (226) that is configured to store the data in response to determining that the NAND die is busy,
wherein the controller is further configured to:
receive the command to write the data from the host system;
in response to receiving the command to write the data, allocate an indirection unit from a queue of free indirection units to the stream and place a pointer to the indirection unit in a queue of in-process indirection units;
cause the data to be written to the indirection unit in the byte-addressable write-in-place non-volatile memory;
in response to the data having been written to the indirection unit in the byte-addressable write-in-place non-volatile memory, cause the pointer to the indirection unit to be placed in a queue of valid indirection units;
determine that free space in the byte-addressable write-in-place non-volatile memory is below a threshold;
determine that the queue of valid indirection units is not empty; and
in response to determining that the free space in the byte-addressable write-in-place non-volatile memory is below the threshold and that the queue of valid indirection units is not empty, read the indirection unit from the byte-addressable write-in-place non-volatile memory and write the indirection unit to at least part of the plurality of NAND dies.

2. The solid state drive of Claim 1, wherein the data for the stream is written directly to the block in the NAND die in response to determining that the NAND die is not busy.

3. The solid state drive of Claim 1, wherein the byte-addressable write-in-place nonvolatile memory includes a chalcogenide phase change material.

4. The solid state drive of Claim 1, wherein the byte-addressable write-in-place nonvolatile memory is a volatile random access memory that is battery backed up.

5. The solid state drive of Claim 1, further comprising:
a volatile memory that is configured to store a Logical to Physical indirection table, wherein each entry in the Logical to Physical address indirection table stores a physical block address at which the data is stored and an identifier of a memory corresponding to the physical block address.

6. The solid state drive of Claim 5, wherein the memory is the byte-addressable write-in-place non-volatile memory.

7. The solid state drive of Claim 5, wherein the memory is the NAND die.

8. A method comprising:
receiving, by a controller, a command from a host system communicatively coupled to a solid state drive, wherein the command indicates to write data in the solid state drive, and wherein the data is associated with a stream;
assigning a block in a NAND die to the stream;
determining that the NAND die is busy;
in response to determining that the NAND die is busy:
in response to receiving the command to write the data, allocate an indirection unit from a queue of free indirection units to the stream and place a pointer to the indirection unit in a queue of in-process indirection units;
storing the data associated with the stream to be written to the block in the NAND die in the indirection unit in a byte-addressable write-in-place non-volatile memory; and
in response to the data having been written to the indirection unit in the byte-addressable write-in-place non-volatile memory, cause the pointer to the indirection unit to be placed in a queue of valid indirection units;
determining that free space in the byte-addressable write-in-place non-volatile memory is below a threshold;
determining that the queue of valid indirection units is not empty; and
in response to determining that the free space in the byte-addressable write-in-place non-volatile memory is below the threshold and that the queue of valid indirection units is not empty, reading the indirection unit from the byte-addressable write-in-place non-volatile memory and writing the indirection unit to at least part of the plurality of NAND dies.

9. The method of Claim 8, wherein data for the stream is written directly to the block in the NAND die in response to determining that the NAND die is not busy.

10. The method of Claim 8, wherein the byte-addressable write-in-place non-volatile memory includes a chalcogenide phase change material.

11. The method of Claim 8, wherein the byte-addressable write-in-place non-volatile memory is a volatile random access memory that is battery backed up.

12. The method of Claim 8, further comprising:
storing a Logical to Physical address indirection table in a volatile memory, wherein each entry in the Logical to Physical address indirection table stores a physical block address at which the data is stored and an identifier of a memory corresponding to the physical block address.

13. The method of Claim 12, wherein the memory is the byte-addressable write-in-place non-volatile memory, or wherein the memory is the NAND die.

14. A system comprising:
a processor; and
a solid state drive comprising:
a controller configured to receive a command to perform an operation in the solid state drive from the processor communicatively coupled to the solid state drive, wherein the command indicates to write data associated with a stream in the solid state drive;
a plurality of NAND dies that are used to store data, wherein a block in one of the plurality of NAND dies is assigned to the stream; and
a byte-addressable write-in-place non-volatile memory configured to store data to be written to the block in the NAND die in response to determining that the NAND die is busy,
wherein the controller is further configured to:
receive the command to write the data from the host system;
in response to receiving the command to write the data, allocate an indirection unit from a queue of free indirection units to the stream and place a pointer to the indirection unit in a queue of in-process indirection units;
cause the data to be written to the indirection unit in the byte-addressable write-in-place non-volatile memory;
in response to the data having been written to the indirection unit in the byte-addressable write-in-place non-volatile memory, cause the pointer to the indirection unit to be placed in a queue of valid indirection units;
determine that free space in the byte-addressable write-in-place non-volatile memory is below a threshold;
determine that the queue of valid indirection units is not empty; and
in response to determining that the free space in the byte-addressable write-in-place non-volatile memory is below the threshold and that the queue of valid indirection units is not empty, read the indirection unit from the byte-addressable write-in-place non-volatile memory and write the indirection unit to at least part of the plurality of NAND dies.

15. The system of Claim 14,
wherein data for the stream is written directly to the block in the NAND die in response to determining that the NAND die is not busy, and/or
wherein the byte-addressable write-in-place non-volatile memory includes a chalcogenide phase change material, or
wherein the byte-addressable write-in-place non-volatile memory is a volatile random access memory that is battery backed up, or
wherein the system further comprises a volatile memory that is configured to store a Logical to Physical indirection table, wherein each entry in the Logical to Physical address indirection table stores a physical block address at which the data is stored and an identifier of a memory corresponding to the physical block address, or
wherein the system further comprises a display communicatively coupled to the processor; or a battery coupled to the processor.

## Patentansprüche

1. Solid State Drive, umfassend:
einen Controller (104) konfiguriert zum Empfangen eines Befehls von einem Hostsystem (112), das kommunikativ mit der Solid State Drive (102) gekoppelt ist, wobei der Befehl angibt, Daten in die Solid State Drive zu schreiben, und wobei die Daten mit einem Datenstrom assoziiert sind;
eine Mehrzahl von NAND-Dies (210-1, ..., 210-N), die zum Speichern von Daten verwendet werden, wobei ein Block in einem aus der Mehrzahl von NAND-Dies dem Datenstrom zugeordnet ist; und
einen byte-adressierbaren nicht-flüchtigen Write-in-place-Arbeitsspeicher (226), der zum Speichern der Daten in Antwort auf ein Bestimmen, dass das NAND-Die beschäftigt ist, konfiguriert ist,
wobei der Controller ferner zu Folgendem konfiguriert ist:
Empfangen des Befehls zum Schreiben der Daten vom Hostsystem;
in Antwort auf das Empfangen des Befehls zum Schreiben der Daten, Zuweisen einer Indirection-Einheit aus einer Warteschlange von freien Indirection-Einheiten an den Datenstrom und Platzieren eines Pointers auf die Indirection-Einheit in einer Warteschlange von In-process-Indirection-Einheiten;
Veranlassen, die Daten in die Indirection-Einheit im byte-adressierbaren nicht-flüchtigen Write-in-place-Arbeitsspeicher zu schreiben;
in Antwort darauf, dass die Daten in die Indirection-Einheit im byte-adressierbaren nicht-flüchtigen Write-in-place-Arbeitsspeicher geschrieben worden sind, Veranlassen, den Pointer auf die Indirection-Einheit in eine Warteschlange von gültigen Indirection-Einheiten zu platzieren;
Bestimmen, dass freier Speicherplatz im byte-adressierbaren nicht-flüchtigen Write-in-place-Arbeitsspeicher unter einer Schwelle liegt;
Bestimmen, dass die Warteschlange von gültigen Indirection-Einheiten nicht leer ist; und
in Antwort auf das Bestimmen, dass der freie Speicherplatz im byte-adressierbaren nicht-flüchtigen Write-in-place-Arbeitsspeicher unter der Schwelle liegt und dass die Warteschlange von gültigen Indirection-Einheiten nicht leer ist, Lesen der Indirection-Einheit aus dem byte-adressierbaren nicht-flüchtigen Write-in-place-Arbeitsspeicher und Schreiben der Indirection-Einheit in zumindest einen Teil der Mehrzahl von NAND-Dies.

2. Solid State Drive nach Anspruch 1, wobei die Daten für den Datenstrom direkt in den Block im NAND-Die in Antwort auf ein Bestimmen, dass das NAND-Die nicht beschäftigt ist, geschrieben werden.

3. Solid State Drive nach Anspruch 1, wobei der byte-adressierbare nicht-flüchtige Write-in-place-Arbeitsspeicher ein Chalcogenid-Phasenwechselmaterial einschließt.

4. Solid State Drive nach Anspruch 1, wobei der byte-adressierbare nicht-flüchtige Write-in-place-Arbeitsspeicher ein flüchtiger Random-Access-Speicher mit Backup-Batterie ist.

5. Solid State Drive nach Anspruch 1, ferner umfassend:
einen flüchtigen Arbeitsspeicher, der zum Speichern einer Logisch-nach-Physisch-Indirection-Tabelle konfiguriert ist, wobei jeder Eintrag in der Logisch-nach-Physisch-Adressen-Indirection-Tabelle eine physische Blockadresse, an der die Daten gespeichert werden, und eine Identifikation eines der physischen Blockadresse entsprechenden Arbeitsspeichers speichert.

6. Solid State Drive nach Anspruch 5, wobei der Arbeitsspeicher der byte-adressierbare nicht-flüchtige Write-in-place-Arbeitsspeicher ist.

7. Solid State Drive nach Anspruch 5, wobei der Arbeitsspeicher das NAND-Die ist.

8. Verfahren, umfassend:
Empfangen, durch einen Controller, eines Befehls von einem Hostsystem, das kommunikativ mit einer Solid State Drive gekoppelt ist, wobei der Befehl angibt, Daten in die Solid State Drive zu schreiben, und wobei die Daten mit einem Datenstrom assoziiert sind;
Zuordnen eines Blocks in einem NAND-Die zum Datenstrom;
Bestimmen, dass das NAND-Die beschäftigt ist;
in Antwort auf das Bestimmen, dass das NAND-Die beschäftigt ist:
in Antwort auf das Empfangen des Befehls zum Schreiben der Daten, Zuweisen einer Indirection-Einheit aus einer Warteschlange von freien Indirection-Einheiten an den Datenstrom und Platzieren eines Pointers auf die Indirection-Einheit in einer Warteschlange von In-process-Indirection-Einheiten;
Speichern der mit dem Datenstrom assoziierten Daten, die in den Block im NAND-Die geschrieben werden sollen, in der Indirection-Einheit in einem byte-adressierbaren nicht-flüchtigen Write-in-place-Arbeitsspeicher; und
in Antwort darauf, dass die Daten in die Indirection-Einheit im byte-adressierbaren nicht-flüchtigen Write-in-place-Arbeitsspeicher geschrieben worden sind, Veranlassen, den Pointer auf die Indirection-Einheit in eine Warteschlange von gültigen Indirection-Einheiten zu platzieren;
Bestimmen, dass freier Speicherplatz im byte-adressierbaren nicht-flüchtigen Write-in-place-Arbeitsspeicher unter einer Schwelle liegt;
Bestimmen, dass die Warteschlange von gültigen Indirection-Einheiten nicht leer ist; und
in Antwort auf das Bestimmen, dass der freie Speicherplatz im byte-adressierbaren nicht-flüchtigen Write-in-place-Arbeitsspeicher unter der Schwelle liegt und dass die Warteschlange von gültigen Indirection-Einheiten nicht leer ist, Lesen der Indirection-Einheit aus dem byte-adressierbaren nicht-flüchtigen Write-in-place-Arbeitsspeicher und Schreiben der Indirection-Einheit in zumindest einen Teil der Mehrzahl von NAND-Dies.

9. Verfahren nach Anspruch 8, wobei Daten für den Datenstrom direkt in den Block im NAND-Die in Antwort auf ein Bestimmen, dass das NAND-Die nicht beschäftigt ist, geschrieben werden.

10. Verfahren nach Anspruch 8, wobei der byte-adressierbare nicht-flüchtige Write-in-place-Arbeitsspeicher ein Chalcogenid-Phasenwechselmaterial einschließt.

11. Verfahren nach Anspruch 8, wobei der byte-adressierbare nicht-flüchtige Write-in-place-Arbeitsspeicher ein flüchtiger Random-Access-Speicher mit Backup-Batterie ist.

12. Verfahren nach Anspruch 8, ferner umfassend:
Speichern einer Logisch-nach-Physisch-Adressen-Indirection-Tabelle in einem flüchtigen Arbeitsspeicher, wobei jeder Eintrag in der Logisch-nach-Physisch-Adressen-Indirection-Tabelle eine physische Blockadresse, an der die Daten gespeichert werden, und eine Identifikation eines der physischen Blockadresse entsprechenden Arbeitsspeichers speichert.

13. Verfahren nach Anspruch 12, wobei der Arbeitsspeicher der byte-adressierbare nicht-flüchtige Write-in-place-Arbeitsspeicher ist oder wobei der Arbeitsspeicher das NAND-Die ist.

14. System, umfassend:
einen Prozessor; und
eine Solid State Drive, umfassend:
einen Controller konfiguriert zum Empfangen eines Befehls von dem Prozessor, der kommunikativ mit der Solid State Drive gekoppelt ist, eine Operation in der Solid State Drive durchzuführen, wobei der Befehl angibt, mit einem Datenstrom assoziierte Daten in die Solid State Drive zu schreiben;
eine Mehrzahl von NAND-Dies, die zum Speichern von Daten verwendet werden, wobei ein Block in einem aus der Mehrzahl von NAND-Dies dem Datenstrom zugeordnet ist; und
einen byte-adressierbaren nicht-flüchtigen Write-in-place-Arbeitsspeicher, der zum Speichern von Daten, die in den Block im NAND-Die geschrieben werden sollen, in Antwort auf ein Bestimmen, dass das NAND-Die beschäftigt ist, konfiguriert ist,
wobei der Controller ferner zu Folgendem konfiguriert ist:
Empfangen des Befehls zum Schreiben der Daten vom Hostsystem;
in Antwort auf das Empfangen des Befehls zum Schreiben der Daten, Zuweisen einer Indirection-Einheit aus einer Warteschlange von freien Indirection-Einheiten an den Datenstrom und Platzieren eines Pointers auf die Indirection-Einheit in einer Warteschlange von In-process-Indirection-Einheiten;
Veranlassen, die Daten in die Indirection-Einheit im byte-adressierbaren nicht-flüchtigen Write-in-place-Arbeitsspeicher zu schreiben;
in Antwort darauf, dass die Daten in die Indirection-Einheit im byte-adressierbaren nicht-flüchtigen Write-in-place-Arbeitsspeicher geschrieben worden sind, Veranlassen, den Pointer auf die Indirection-Einheit in eine Warteschlange von gültigen Indirection-Einheiten zu platzieren;
Bestimmen, dass freier Speicherplatz im byte-adressierbaren nicht-flüchtigen Write-in-place-Arbeitsspeicher unter einer Schwelle liegt;
Bestimmen, dass die Warteschlange von gültigen Indirection-Einheiten nicht leer ist; und
in Antwort auf das Bestimmen, dass der freie Speicherplatz im byte-adressierbaren nicht-flüchtigen Write-in-place-Arbeitsspeicher unter der Schwelle liegt und dass die Warteschlange von gültigen Indirection-Einheiten nicht leer ist, Lesen der Indirection-Einheit aus dem byte-adressierbaren nicht-flüchtigen Write-in-place-Arbeitsspeicher und Schreiben der Indirection-Einheit in zumindest einen Teil der Mehrzahl von NAND-Dies.

15. System nach Anspruch 14,
wobei Daten für den Datenstrom direkt in den Block im NAND-Die in Antwort auf ein Bestimmen, dass das NAND-Die nicht beschäftigt ist, geschrieben werden, und/oder
wobei der byte-adressierbare nicht-flüchtige Write-in-place-Arbeitsspeicher ein Chalcogenid-Phasenwechselmaterial einschließt, oder
wobei der byte-adressierbare nicht-flüchtige Write-in-place-Arbeitsspeicher ein flüchtiger Random-Access-Speicher mit Backup-Batterie ist, oder
wobei das System ferner einen flüchtigen Arbeitsspeicher umfasst, der zum Speichern einer Logisch-nach-Physisch-Indirection-Tabelle konfiguriert ist, wobei jeder Eintrag in der Logisch-nach-Physisch-Adressen-Indirection-Tabelle eine physische Blockadresse, an der die Daten gespeichert werden, und eine Identifikation eines der physischen Blockadresse entsprechenden Arbeitsspeichers speichert, oder
wobei das System ferner einen kommunikativ mit dem Prozessor gekoppelten Display oder eine mit dem Prozessor gekoppelte Batterie umfasst.

## Revendications

1. Disque à semiconducteurs, comprenant :
un dispositif de commande (104) configuré pour recevoir un ordre en provenance d'un système hôte (112) qui est couplé en communication au disque à semiconducteurs (102), l'ordre indiquant d'écrire des données dans le disque à semiconducteurs et les données étant associées à un flux ;
une pluralité de puces NON-ET (210-1, ..., 210-N) qui sont utilisées pour stocker des données, un bloc dans une puce NON-ET parmi la pluralité de puces NON-ET étant attribué au flux ; et
une mémoire non volatile adressable par octet et à écriture in situ (226) qui est configurée pour stocker les données en réponse à la détermination du fait que la puce NON-ET est occupée,
le dispositif de commande étant en outre configuré pour :
recevoir l'ordre d'écriture des données en provenance du système hôte ;
en réponse à la réception de l'ordre d'écriture des données, allouer au flux une unité d'indirection provenant d'une file d'attente d'unités d'indirection libres et placer un pointeur vers l'unité d'indirection dans une file d'attente d'unités d'indirection en cours de traitement ;
provoquer l'écriture des données dans l'unité d'indirection de la mémoire non volatile adressable par octet et à écriture in situ ;
en réponse à l'écriture des données dans l'unité d'indirection de la mémoire non volatile adressable par octet et à écriture in situ, provoquer le placement du pointeur vers l'unité d'indirection dans une file d'attente d'unités d'indirection valides ;
déterminer qu'un espace libre dans la mémoire non volatile adressable par octet et à écriture in situ est inférieur à un seuil ;
déterminer que la file d'attente d'unités d'indirection valides n'est pas vide ; et
en réponse à la détermination du fait que l'espace libre dans la mémoire non volatile adressable par octet et à écriture in situ est inférieur au seuil et que la file d'attente d'unités d'indirection valides n'est pas vide, lire l'unité d'indirection à partir de la mémoire non volatile adressable par octet et à écriture in situ et écrire l'unité d'indirection sur au moins une partie de la pluralité de puces NON-ET.

2. Disque à semiconducteurs selon la revendication 1, les données du flux étant écrites directement dans le bloc de la puce NON-ET en réponse à la détermination du fait que la puce NON-ET n'est pas occupée.

3. Disque à semiconducteurs selon la revendication 1, la mémoire non volatile adressable par octet et à écriture in situ comprenant un matériau à changement de phase à base de chalcogénure.

4. Disque à semiconducteurs selon la revendication 1, la mémoire non volatile adressable par octet et à écriture in situ étant une mémoire vive volatile qui est sauvegardée par batterie.

5. Disque à semiconducteurs selon la revendication 1, comprenant en outre :
une mémoire volatile qui est configurée pour stocker une table de conversion d'indirections logiques en indirections physiques, chaque entrée de la table de conversion d'indirections d'adresses logiques en indirections d'adresses physiques stockant une adresse de bloc physique au niveau de laquelle les données sont stockées et un identifiant d'une mémoire correspondant à l'adresse de bloc physique.

6. Disque à semiconducteurs selon la revendication 5, la mémoire étant la mémoire non volatile adressable par octet et à écriture in situ.

7. Disque à semiconducteurs selon la revendication 5, la mémoire étant la puce NON-ET.

8. Procédé, comprenant les étapes consistant à :
recevoir, par un dispositif de commande, un ordre en provenance d'un système hôte couplé en communication à un disque à semiconducteurs, l'ordre indiquant d'écrire des données dans le disque à semiconducteurs et les données étant associées à un flux ;
attribuer au flux un bloc dans une puce NON-ET ;
déterminer que la puce NON-ET est occupée ;
en réponse à la détermination du fait que la puce NON-ET est occupée :
en réponse à la réception de l'ordre d'écriture des données, allouer au flux une unité d'indirection provenant d'une file d'attente d'unités d'indirection libres et placer un pointeur vers l'unité d'indirection dans une file d'attente d'unités d'indirection en cours de traitement ;
stocker les données associées au flux à écrire sur le bloc de la puce NON-ET dans l'unité d'indirection d'une mémoire non volatile adressable par octet et à écriture in situ ; et
en réponse à l'écriture des données dans l'unité d'indirection de la mémoire non volatile adressable par octet et à écriture in situ, provoquer le placement du pointeur vers l'unité d'indirection dans une file d'attente d'unités d'indirection valides ;
déterminer qu'un espace libre dans la mémoire non volatile adressable par octet et à écriture in situ est inférieur à un seuil ;
déterminer que la file d'attente d'unités d'indirection valides n'est pas vide ; et
en réponse à la détermination du fait que l'espace libre dans la mémoire non volatile adressable par octet et à écriture in situ est inférieur au seuil et que la file d'attente d'unités d'indirection valides n'est pas vide, lire l'unité d'indirection à partir de la mémoire non volatile adressable par octet et à écriture in situ et écrire l'unité d'indirection sur au moins une partie de la pluralité de puces NON-ET.

9. Procédé selon la revendication 8, des données du flux étant écrites directement dans le bloc de la puce NON-ET en réponse à la détermination du fait que la puce NON-ET n'est pas occupée.

10. Procédé selon la revendication 8, la mémoire non volatile adressable par octet et à écriture in situ comprenant un matériau à changement de phase à base de chalcogénure.

11. Procédé selon la revendication 8, la mémoire non volatile adressable par octet et à écriture in situ étant une mémoire vive volatile qui est sauvegardée par batterie.

12. Procédé selon la revendication 8, comprenant en outre l'étape consistant à :
stocker dans une mémoire volatile une table de conversion d'indirections d'adresses logiques en indirections d'adresses physiques, chaque entrée de la table de conversion d'indirections d'adresses logiques en indirections d'adresses physiques stockant une adresse de bloc physique au niveau de laquelle les données sont stockées et un identifiant d'une mémoire correspondant à l'adresse de bloc physique.

13. Procédé selon la revendication 12, la mémoire étant la mémoire non volatile adressable par octet et à écriture in situ, ou la mémoire étant la puce NON-ET.

14. Système comprenant :
un processeur ; et
un disque à semiconducteurs comprenant :
un dispositif de commande configuré pour recevoir un ordre de réalisation d'une opération dans le disque à semiconducteurs en provenance du processeur couplé en communication au disque à semiconducteurs, l'ordre indiquant d'écrire des données associées à un flux dans le disque à semiconducteurs ;
une pluralité de puces NON-ET qui sont utilisées pour stocker des données, un bloc dans une puce NON-ET parmi la pluralité de puces NON-ET étant attribué au flux ; et
une mémoire non volatile adressable par octet et à écriture in situ configurée pour stocker des données à écrire sur le bloc de la puce NON-ET en réponse à la détermination du fait que la puce NON-ET est occupée,
le dispositif de commande étant en outre configuré pour :
recevoir l'ordre d'écriture des données en provenance du système hôte ;
en réponse à la réception de l'ordre d'écriture des données, allouer au flux une unité d'indirection provenant d'une file d'attente d'unités d'indirection libres et placer un pointeur vers l'unité d'indirection dans une file d'attente d'unités d'indirection en cours de traitement ;
provoquer l'écriture des données dans l'unité d'indirection de la mémoire non volatile adressable par octet et à écriture in situ ;
en réponse à l'écriture des données dans l'unité d'indirection de la mémoire non volatile adressable par octet et à écriture in situ, provoquer le placement du pointeur vers l'unité d'indirection dans une file d'attente d'unités d'indirection valides ;
déterminer qu'un espace libre dans la mémoire non volatile adressable par octet et à écriture in situ est inférieur à un seuil ;
déterminer que la file d'attente d'unités d'indirection valides n'est pas vide ; et
en réponse à la détermination du fait que l'espace libre dans la mémoire non volatile adressable par octet et à écriture in situ est inférieur au seuil et que la file d'attente d'unités d'indirection valides n'est pas vide, lire l'unité d'indirection à partir de la mémoire non volatile adressable par octet et à écriture in situ et écrire l'unité d'indirection sur au moins une partie de la pluralité de puces NON-ET.

15. Système selon la revendication 14,
des données du flux étant écrites directement dans le bloc de la puce NON-ET en réponse à la détermination du fait que la puce NON-ET n'est pas occupée, et/ou
la mémoire non volatile adressable par octet et à écriture in situ comprenant un matériau à changement de phase à base de chalcogénure, ou
la mémoire non volatile adressable par octet et à écriture in situ étant une mémoire vive volatile qui est sauvegardée par batterie, ou
le système comprenant en outre une mémoire volatile qui est configurée pour stocker une table de conversion d'indirections logiques en indirections physiques, chaque entrée de la table de conversion d'indirections d'adresses logiques en indirections d'adresses physiques stockant une adresse de bloc physique au niveau de laquelle les données sont stockées et un identifiant d'une mémoire correspondant à l'adresse de bloc physique, ou
le système comprenant en outre une unité d'affichage couplée en communication au processeur ; ou une batterie couplée au processeur.
